(19) Europäisches Patentamt / European Patent Office / Office européen des brevets

(11) **EP 4 373 215 A1**

(12) **EUROPEAN PATENT APPLICATION**

(43) Date of publication:
**22.05.2024 Bulletin 2024/21**

(21) Application number: **22208472.5**

(22) Date of filing: **21.11.2022**

(51) International Patent Classification (IPC):
*H05B 45/20* (2020.01)  *H05B 45/44* (2020.01)
*A01G 7/04* (2006.01)  *A01G 9/24* (2006.01)

(52) Cooperative Patent Classification (CPC):
**H05B 45/44; A01G 7/045; A01G 9/249;** H05B 45/20

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Tridonic GmbH & Co. KG**
**6851 Dornbirn (AT)**

(72) Inventors:
• **Dobos, Janos**
  **6850 Dornbirn (AT)**
• **Mozsáry, András**
  **6850 Dornbirn (AT)**

(74) Representative: **Rupp, Christian et al**
**Mitscherlich PartmbB**
**Patent- und Rechtsanwälte**
**Karlstraße 7**
**80333 München (DE)**

(54) **DYNAMIC SPECTRUM LED MODULE**

(57)    Disclosed is an LED module (1) being connectable to an LED driver (5). The LED module (1) comprises multiple LED strings (11A-11B, 13A-13B, 14A) having mutually complementary spectra; a parallel connection (12A-12C, 15A-15B), comprising one or more of the multiple LED strings (11A-11B, 13A-13B, 14A); a series connection relative to the parallel connection (12A-12C, 15A-15B), comprising one or more of the multiple LED strings (11A-11B, 13A-13B, 14A); and a switch (16A-16B). The switch (16A-16B) is configured to select, in dependence of a control signal (17A-17D), at most one of the LED strings (11A-11B, 14A) of the parallel connection (12A-12C, 15A-15B) for feeding by the LED driver (5). The resulting dynamic spectrum may be achieved using an off-the-shelf LED driver (5) being operated nearly at full power under all spectrum configurations.

FIG. 1

EP 4 373 215 A1

**Description**

**Technical Field**

The present disclosure relates to lighting technology, and in particular to a light-emitting device (LED) module, a lighting system comprising the LED module, and a method of operating the LED module.

**Background Art**

Variable color temperature control, such as performed in tunable white LED modules, typically involves a plurality of LED groups for exclusive operation (one-at-a-time).

Within this framework, each LED group is required to deliver a full dimming range alone, and to make use of a full power of its LED driver. That is to say, it is impossible to combine such LED groups consuming the full power with smaller LED groups consuming only a fraction of the full power. It may thus be required to deploy mid-power and small-power LED drivers.

**Summary**

In view of the above-mentioned drawbacks and limitations, the present disclosure seeks to improve a variable color temperature control of LED modules. This is achieved by the embodiments as defined by the appended independent claims. Preferred embodiments are set forth in the dependent claims and in the following description and drawings.

A first aspect of the present disclosure relates to an LED module being connectable to an LED driver. The LED module comprises multiple LED strings having mutually complementary spectra; a parallel connection, comprising one or more of the multiple LED strings; a series connection relative to the parallel connection, comprising one or more of the multiple LED strings; and a switch. The switch is configured to select, in dependence of a control signal, at most one of the LED strings of the parallel connection for feeding by the LED driver.

The LED module may be designed for feeding by the LED driver with electric power of between 200 W and 600 W.

The switch may further be configured to select the at most one of the LED strings of the parallel connection in a cyclic manner in accordance with each leading and/or falling edge of the control signal.

The switch may further be configured to select the at most one of the LED strings of the parallel connection in a direct manner in accordance with an amplitude level of the control signal.

The LED module may further comprise an inductor interposed in a current path between the LED driver and the switch, and the switch may further be configured to select the at most one of the LED strings of the parallel connection.

The switch may further be configured to select the at most one of the LED strings of the parallel connection in accordance with a switching frequency of between 800 and 1.250 Hz, preferably between 900 and 1.100 Hz, more preferably between 950 and 1.050 Hz, and most preferably between 995 and 1.005 Hz.

The switch may further be configured to select the at most one of the LED strings of the parallel connection in accordance with a time sequence of target spectra of the LED module.

The mutually complementary spectra may comprise one or more of: an UV-B spectrum peaking in a wavelength range of 280 to 315 nm, and an UV-A spectrum peaking in a wavelength range of 315 to 400 nm. The mutually complementary spectra may further comprise zero or more of: a blue spectrum peaking in a wavelength range of 400 to 500 nm, a wideband green-red spectrum peaking in a wavelength range of 500 to 620 nm, and a deep red spectrum peaking in a wavelength range of 620 to 700 nm. The mutually complementary spectra may further comprise: a far red spectrum peaking in a wavelength range of 700 to 750 nm.

A second aspect of the present disclosure relates to a use of an LED module of the first aspect of the present disclosure or any of its implementations in lighting for indoor or greenhouse farming.

A third aspect of the present disclosure relates to a method of operating an LED module. The LED module comprises multiple LED strings, having mutually complementary spectra; a parallel connection, comprising one or more of the multiple LED strings; a series connection relative to the parallel connection, comprising one or more of the multiple LED strings; and a switch. The method comprises selecting, in dependence of a control signal, at most one of the LED strings of the parallel connection for feeding by the LED driver.

The selecting may further comprise selecting the at most one of the LED strings of the parallel connection in a cyclic manner in accordance with each leading and/or falling edge of the control signal.

The selecting may further comprise selecting the at most one of the LED strings of the parallel connection in a direct manner in accordance with an amplitude level of the control signal.

The selecting may further comprise selecting the at most one of the LED strings of the parallel connection in accordance with a switching frequency of between 800 and 1.250 Hz, preferably between 900 and 1.100 Hz, more preferably between 950 and 1.050 Hz, and most preferably between 995 and 1.005 Hz.

The selecting may further comprise selecting the at most one of the LED strings of the parallel connection in accordance with a time sequence of target spectra of the LED module.

A fourth aspect of the present disclosure relates to a lighting system, comprising an LED module of the first aspect of the present disclosure or any of its implementations; and an LED driver being connected to and configured to feed the LED module.

**Advantageous Effects**

The present disclosure provides an LED module having a dynamic light spectrum, wherein a main spectrum may be complemented by optional spectral components. In particular, a long-term change of a spectrum over a course of several weeks or months may be achieved, e.g. in accordance with different states of maturity of plants in indoor / greenhouse farming.

The LED groups associated with the optional spectral components consume a fraction of the LED driver's full power and have differing combined LED voltages. Even so, a frequent switching-over between the optional LED groups in accordance with appropriate duty cycle settings results in the LED driver virtually supplying a constant load. Thus, the dynamic spectrum feature may be made available using an off-the-shelf LED driver being operated nearly at full power under all spectrum configurations, such that there is no need to deploy additional mid-power and small-power LED drivers.

The technical effects and advantages described above in relation with the LED module equally apply to the method of operating the LED module having corresponding features, to the use of the LED module, as well as to the lighting system comprising the LED module.

**Brief Description of Drawings**

The above-described aspects and implementations will now be explained with reference to the accompanying drawings, in which the same or similar reference numerals designate the same or similar elements.

The features of these aspects and implementations may be combined with each other unless specifically stated otherwise.

The drawings are to be regarded as being schematic representations, and elements illustrated in the drawings are not necessarily shown to scale. Rather, the various elements are represented such that their function and general purpose become apparent to those skilled in the art.

FIG. 1    illustrates a lighting system 4 in accordance with a third aspect of the present disclosure including an LED module 1 in accordance with a first aspect of the present disclosure;

FIG. 2    illustrates LED string selection in a cyclic manner in accordance with each leading and/or falling edge of the control signal;

FIG. 3    illustrates LED string selection in a direct manner in accordance with an amplitude level (i.e., magnitude) of the control signal; and

FIG. 4    illustrates a further LED module 1 in accordance with the first aspect the present disclosure;

FIG. 5    illustrates a another LED module 1 in accordance with the first aspect the present disclosure;

FIG. 6    illustrates a method 3 of operating an LED module 1 in accordance with a third aspect the present disclosure.

**Detailed Descriptions of Drawings**

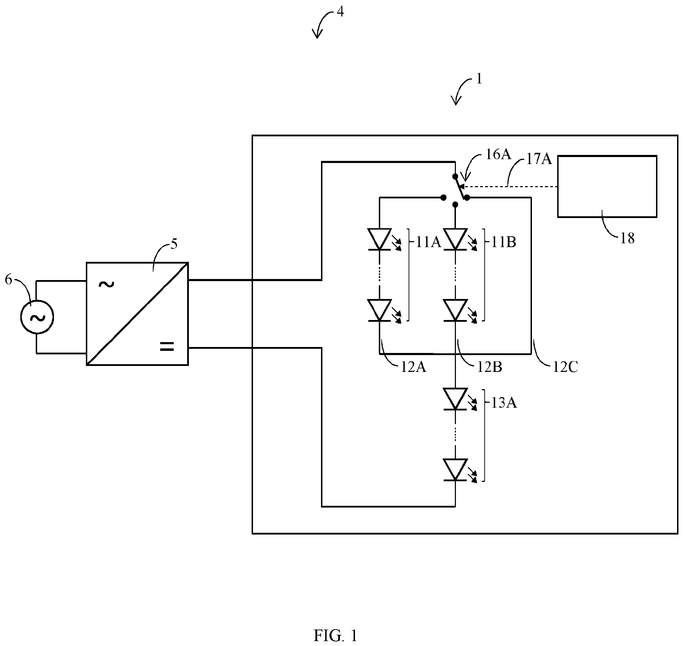

FIG. 1 illustrates a lighting system 4 in accordance with a third aspect of the present disclosure including an LED module 1 in accordance with a first aspect of the present disclosure.

The lighting system 4 further comprises an LED driver 5 being connected to and configured to feed the LED module 1 off an AC mains power supply 6. In particular, the LED module 1 may be designed for feeding by the LED driver 5 with electric power of between 200 W and 600 W.

The LED module 1 comprises multiple LED strings 11A-11B, 13A having mutually complementary spectra.

As used herein, mutually complementary spectra may refer to sets of spectral content having respective set differences relative to one another.

The mutually complementary spectra may include one or more of: an UV-B spectrum peaking in a wavelength range of 280 to 315 nm, and an UV-A spectrum peaking in a wavelength range of 315 to 400 nm. The mutually complementary spectra may further include zero or more of: a blue spectrum peaking in a wavelength range of 400 to 500 nm, a wideband green-red spectrum peaking in a wavelength range of 500 to 620 nm, and a deep red spectrum peaking in a wavelength range of 620 to 700 nm. The mutually complementary spectra may further include: a far red spectrum peaking in a wavelength range of 700 to 750 nm.

The LED module 1 further comprises a parallel connection 12A-12C comprising the LED strings 11A-11B. Note that the parallel-connected LED strings 11A, 11B may entail differing combined LED voltages, and that the bypass branch 12C involves no voltage drop at all.

The LED module 1 further comprises a series connection relative to the parallel connection 12A-12C comprising the LED string 13A. The series-connected LED string 13A consistently forms part of the current path of the LED module 1 all the time.

The LED module 1 further comprises a switch 16A.

The switch 16A is configured to select, in dependence of a control signal 17A provided by a control unit 18 of the LED module 1, at most one of the LED strings 11A-11B of the parallel connection 12A-12C for feeding by the LED driver 5.

In other words, only a single branch of the parallel connection 12A-12C may form part of the current path of the LED module 1 at any point in time.

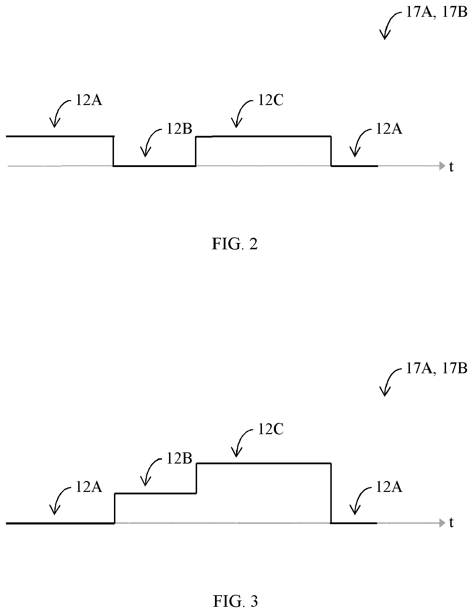

FIG. 2 illustrates LED string selection in a cyclic manner.

In accordance with this mode of operation, the switch 16A may further be configured to select the at most one of the LED strings 11A-11B of the parallel connection 12A-12C cyclically in accordance with each leading and/or falling edge of the control signal 17A.

In other words, the branches of the parallel connection 12A-12C take turns in being looped-in into the current path of the LED module 1, for a respective time duration in accordance with a time interval between successive edges of the control signal 17A.

In the example of FIG. 2, a falling edge triggers a switch from branch 12A to branch 12B, a leading edge triggers a switch from branch 12B to branch 12C, and a falling edge triggers a switch from branch 12C to branch 12A. This cycle may be repeated in accordance with a switching frequency being explained in more detail below.

Evidently, in case of a single LED string in the parallel connection the control signal may be regarded as a pulse width modulation (PWM) signal, and each cycle of logical '1' and '0' amplitude levels of the control signal 17A may be understood as a switching period involving a duty cycle. As such, the at most one of the LED strings of the parallel connection may be selected in a cyclic manner in accordance with appropriate duty cycle settings.

FIG. 3 illustrates LED string selection in a direct manner.

In accordance with this alternative mode of operation, the switch 16A may further be configured to select the at most one of the LED strings 11A-11B of the parallel connection 12A-12C, directly in accordance with an amplitude level of the control signal 17A.

Thus, the branches of the parallel connection 12A-12C take turns in being looped-in into the current path of the LED module 1, for a respective time duration in accordance with a time duration of the respective amplitude level of the control signal 17A.

In the example of FIG. 3, a first non-zero amplitude level triggers a switch from branch 12A to branch 12B, a second non-zero amplitude level triggers a switch from branch 12B to branch 12C, and a zero amplitude level triggers a switch from branch 12C to branch 12A. This cycle may also be repeated in accordance with a switching frequency being explained in more detail below.

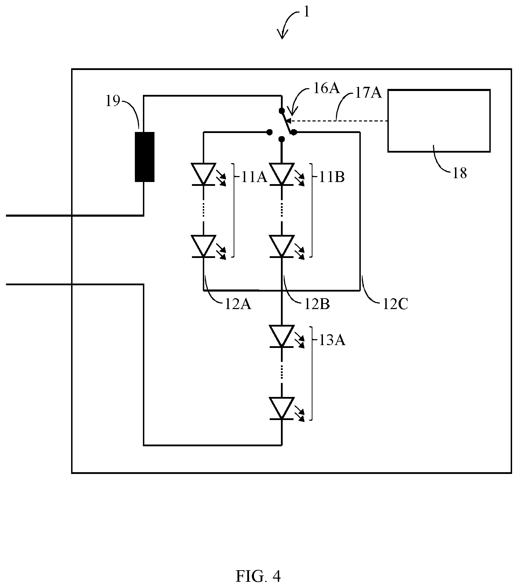

FIG. 4 illustrates a further LED module 1 in accordance with the first aspect the present disclosure.

In addition to the LED module 1 of FIG. 1, the LED module 1 of FIG. 4 may further comprise an inductor 19 interposed in the current path between the LED driver 5 and the switch 16A.

The inductor 19 may have a inductance value being below a predetermined maximum inductance value, such as 1 mH.

In connection with this implementation, the switch 16A may further be configured to select the at most one of the LED strings 11A-11B of the parallel connection 12A-12C in accordance with a switching frequency of between 800 and 1.250 Hz, preferably between 900 and 1.100 Hz, more preferably between 950 and 1.050 Hz, and most preferably between 995 and 1.005 Hz.

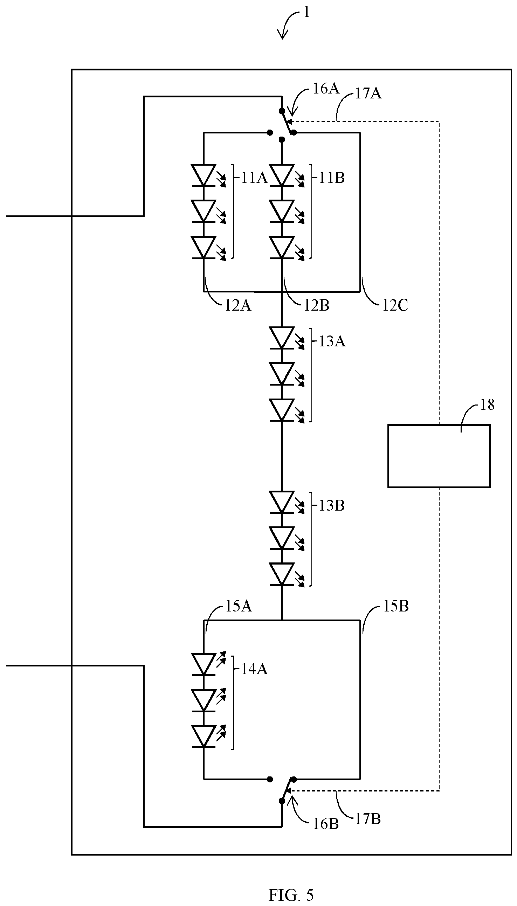

FIG. 5 illustrates another LED module 1 in accordance with the first aspect the present disclosure.

The LED module 1 comprises multiple LED strings 11A-11B, 13A-13B, 14A having mutually complementary spectra, as defined previously.

The LED module 1 further comprises a parallel connection 12A-12C comprising the LED strings 11A-11B, and a parallel connection 15A-15B comprising the LED string 14A. Similarly to the LED module 1 ofFIG. 1, the parallel-connected LED strings 11A, 11B, 14Amay entail differing combined LED voltages, and the bypass branches 12C, 15B involve no voltage drop at all.

The LED module 1 further comprises a series connection relative to the parallel connections 12A-12C, 15A-15B, comprising the LED strings 13A-13B. The series-connected LED strings 13A-13B consistently form part of the current path of the LED module 1 all the time.

The LED module 1 further comprises two switches 16A-16B.

The switch 16A is configured to select, in dependence of a control signal 17A provided by a control unit 18 of the LED module 1, at most one of the LED strings 11A-11B of the parallel connection 12A-12C for feeding by the LED driver 5.

Likewise, the switch 16B is configured to select, in dependence of a control signal 17B provided by the control unit 18 of the LED module 1, at most one of the LED string 14A of the parallel connection 15A-15B for feeding by the LED driver 5.

That is to say, only a single branch of the parallel connection 12A-12C and only a single branch of the parallel connection 15A-15B may form part of the current path of the LED module 1 at any point in time.

Given an appropriate design of the mutually complementary spectra, a use of the LED module 1 of FIG. 5 may be particularly advantageous in lighting for indoor or greenhouse farming.

A non-limiting example of such a spectral design is as follows: the emission spectrum of the parallel-connected LED string 11A may include an UV-A spectrum peaking in a wavelength range of 315 to 400 nm (two-third of its LEDs), and a far red spectrum peaking in a wavelength range of 700 to 750 nm (one-third of its LEDs); the emission spectrum of the parallel-connected LED string 11B may comprise a far red spectrum peaking in a wavelength range of 700 to 750 nm, the emission spectrum of the serially-connected LED string 13A may comprise a blue spectrum peaking in a wavelength range of 400 to 500 nm, the emission spectrum of the serially-connected LED string 13B may comprise a deep red spectrum peaking in a wavelength range of 620 to 700 nm; and the parallel-connected LED string 14A may comprise a wideband green-red spectrum peaking in a wavelength range of 500 to 620 nm.

Based on such a spectral design, the respective switch 16A-16B may further be configured to select the at most one of the LED strings 11A-11B, 14A of the respective parallel connection 12A-12C, 15A-15B in accordance with a time sequence of target spectra of the LED module 1.

In other words, lighting may be performed in accordance with "light recipes" which map different target spectra to different time periods (phases), such as states of maturity of plants in indoor / greenhouse farming.

A non-limiting example of such a light recipe (i.e., time sequence of target spectra) is given in the following table:

| Time period | Percentage of respective total power (i.e., duty cycle $D_{tot}$) | | | | |
| --- | --- | --- | --- | --- | --- |
| | 315-400 nm (UV-A) | 400-500 nm (blue) | 500-620 nm (green-red) | 620-700 nm (deep red) | 700-750 nm (far red) |
| Plant growth phase 1 | 0% | 100% | 0% | 100% | 75% |
| Plant growth phase 2 | 0% | 100% | 50% | 100% | 75% |
| Plant growth phase 3 | 0% | 100% | 50% | 100% | 25% |
| Plant growth phase 4 | 50% | 100% | 100% | 100% | 41% |

The light recipe specifies 100% (full emission) of the blue and deep red spectra in all time periods, corresponding to the series-connected LED strings 13A-13B consistently forming part of the current path of the LED module 1 all the time.

The light recipe further specifies that the wideband green-red spectrum varies between 0% (no emission), 50% (half emission) and 100% (full emission) depending on the time period, corresponding to the parallel-connected LED string 14A forming part of the current path of the LED module 1 for 0%, 50% and 100% of total time, in accordance with a duty cycle $D_{tot}$ of the control signal 17B.

The light recipe further specifies that the UV-A spectrum varies between 0% (no emission) and 50% (half emission) depending on the time period, corresponding to the parallel-connected LED string 11A forming part of the current path of the LED module 1 for 0% and 50% of total time, in accordance with a duty cycle $D_{tot}$ of the control signal 17A.

Given the above LED module 1, this implies that ¼ of all the far red LEDs are also active for 0% and 50% of total time, corresponding to a contribution to the far red spectrum between $w_{12A} \cdot D_{12A} = \frac{1}{4} \cdot 0\% = 0\%$ (no emission) and $w_{12A} \cdot D_{12A} = \frac{1}{4} \cdot 50\% = 12{,}5\%$ (one-eighth emission).

However, according to the above light recipe, the far red emission should vary between $D_{tot} = 75\%$ (three-

quarter emission), 25% (one-fourth emission) and 41%, depending on the time period.

Taking into account that the parallel-connected LED string 11A having ¼ of all the far red LEDs already contributes between $w_{12A} \cdot D_{12A}$ = 0% and $w_{12A} \cdot D_{12A}$ = 12,5%, this means that the parallel-connected LED string 11B having ¾ of all the far red LEDs must contribute between $W_{12B} \cdot D_{12B}$ = 0%, 25% and 28,5% depending on the time period.

This corresponds to the parallel-connected LED string 11B forming part of the current path of the LED module 1 for 100%, 33% and 38% of total time, in accordance with a duty cycle $D_{12B}$ of the control signal 17A and the equation

$$s_{12A} \cdot D_{12A} + s_{12B} \cdot D_{12B} = D_{tot}.$$

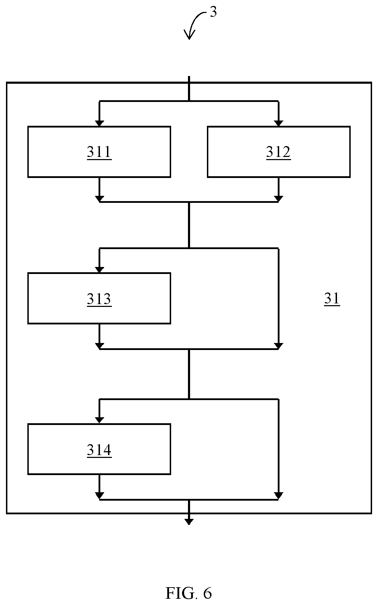

FIG. 6 illustrates a method 3 of operating an LED module 1 in accordance with a third aspect the present disclosure.

The LED module 1 comprises multiple LED strings 11A-11B, 13A-13B, 14A, having mutually complementary spectra; a parallel connection 12A-12C, 15A-15B, comprising one or more of the multiple LED strings 11A-11B, 13A-13B, 14A; aseries connection relative to the parallel connection 12A-12C, 15A-15B, comprising one or more of the multiple LED strings 11A-11B, 13A-13B, 14A; and a switch 16A-16B.

The method 2 of operating the LED module 1 comprises a step of selecting 31, in dependence of a control signal 17A-17B, at most one of the LED strings 11A-11B, 14A of the parallel connection 12A-12C, 15A-15B for feeding by the LED driver 5.

The selecting 31 may further comprise selecting 311 the at most one of the LED strings 11A-11B, 14A of the parallel connection 12A-12C, 15A-15B either in a cyclic manner in accordance with each leading and/or falling edge of the control signal 17A-17B, or in a direct manner in accordance with an amplitude level of the control signal 17A-17B.

The selecting 31 may further comprise selecting 313 the at most one of the LED strings 11A-11B, 14A of the parallel connection 12A-12C, 15A-15B in accordance with a switching frequency of between 800 and 1.250 Hz, preferably between 900 and 1.100 Hz, more preferably between 950 and 1.050 Hz, and most preferably between 995 and 1.005 Hz.

The selecting 31 may further comprise selecting 314 the at most one of the LED strings 11A-11B, 14A of the parallel connection 12A-12C, 15A-15B in accordance with a time sequence of target spectra of the LED module 1, as specified above.

**Claims**

1. An LED module (1) being connectable to an LED driver (5), comprising

   multiple LED strings (11A-11B, 13A-13B, 14A) having mutually complementary spectra;
   a parallel connection (12A-12C, 15A-15B), comprising one or more of the multiple LED strings (11A-11B, 13A-13B, 14A);
   a series connection relative to the parallel connection (12A-12C, 15A-15B), comprising one or more of the multiple LED strings (11A-11B, 13A-13B, 14A);
   a switch (16A-16B), being configured to select, in dependence of a control signal (17A-17B), at most one of the LED strings (11A-11B, 14A) of the parallel connection (12A-12C, 15A-15B) for feeding by the LED driver (5).

2. The LED module (1) of claim 1,
   being designed for feeding by the LED driver (5) with electric power of between 200 W and 600 W.

3. The LED module (1) of claim 1 or claim 2,
   the switch (16A-16B) further being configured to select the at most one of the LED strings (11A-11B, 14A) of the parallel connection (12A-12C, 15A-15B) in a cyclic manner in accordance with each leading and/or falling edge of the control signal (17A-17B).

4. The LED module (1) of claim 1 or claim 2,
   the switch (16A-16B) further being configured to select the at most one of the LED strings (11A-11B, 14A) of the parallel connection (12A-12C, 15A-15B) in a direct manner in accordance with an amplitude level of the control signal (17A-17B).

5. The LED module (1) of any one of the preceding claims,

   further comprising an inductor (19) interposed in a current path between the LED driver (5) and the switch (16A-16B);
the switch (16A-16B) further being configured to select the at most one of the LED strings (11A-11B, 14A) of the parallel connection (12A-12C, 15A-15B).

6. The LED module (1) of claim 5,
the switch (16A-16B) further being configured to select the at most one of the LED strings (11A-11B, 14A) of the parallel connection (12A-12C, 15A-15B) in accordance with a switching frequency of

- between 800 and 1.250 Hz,
- preferably between 900 and 1.100 Hz,
- more preferably between 950 and 1.050 Hz, and
- most preferably between 995 and 1.005 Hz.

7. The LED module (1) of any one of the preceding claims,
the switch (16A-16B) further being configured to select the at most one of the LED strings (11A-11B, 14A) of the parallel connection (12A-12C, 15A-15B) in accordance with a time sequence of target spectra of the LED module (1).

8. The LED module (1) of any one of the preceding claims,

the mutually complementary spectra comprising one or more of:

- an UV-B spectrum peaking in a wavelength range of 280 to 315 nm, and
- an UV-A spectrum peaking in a wavelength range of 315 to 400 nm;

the mutually complementary spectra further comprising zero or more of:

- a blue spectrum peaking in a wavelength range of 400 to 500 nm,
- a wideband green-red spectrum peaking in a wavelength range of 500 to 620 nm, and
- a deep red spectrum peaking in a wavelength range of 620 to 700 nm; and

the mutually complementary spectra further comprising:

- a far red spectrum peaking in a wavelength range of 700 to 750 nm.

9. Use of an LED module (1) of any one of the claims 1 to 8 in lighting for indoor or greenhouse farming.

10. A method (3) of operating an LED module (1),

the LED module (1) comprising
multiple LED strings (11A-11B, 13A-13B, 14A), having mutually complementary spectra;
a parallel connection (12A-12C, 15A-15B) , comprising one or more of the multiple LED strings (11A-11B, 13A-13B, 14A);
a series connection relative to the parallel connection (12A-12C, 15A-15B), comprising one or more of the multiple LED strings (11A-11B, 13A-13B, 14A); and
a switch (16A-16B);
the method (3) comprising
selecting (31), in dependence of a control signal (17A-17B), at most one of the LED strings (11A-11B, 14A) of the parallel connection (12A-12C, 15A-15B) for feeding by the LED driver (5).

11. The method (3) of claim 10, the selecting (31) further comprising
selecting (311) the at most one of the LED strings (11A-11B, 14A) of the parallel connection (12A-12C, 15A-15B) in a cyclic manner in accordance with each leading and/or falling edge of the control signal (17A-17B).

12. The method (3) of claim 10, the selecting (31) further comprising
selecting (312) the at most one of the LED strings (11A-11B, 14A) of the parallel connection (12A-12C, 15A-15B) in a direct manner in accordance with an amplitude level of the control signal (17A-17B).

13. The method (3) of any one of the claims 10 to 12, the selecting (31) further comprising selecting (313) the at most one of the LED strings (11A-11B, 14A) of the parallel connection (12A-12C, 15A-15B) in accordance with a switching frequency of

- between 800 and 1.250 Hz,
- preferably between 900 and 1.100 Hz,
- more preferably between 950 and 1.050 Hz, and
- most preferably between 995 and 1.005 Hz.

14. The method (3) of any one of the claims 10 to 13, the selecting (31) further comprising selecting (314) the at most one of the LED strings (11A-11B, 14A) of the parallel connection (12A-12C, 15A-15B) in accordance with a time sequence of target spectra of the LED module (1).

15. A lighting system (4), comprising
an LED module (1) of any one of the claims 1 to 8; and
an LED driver (5) being connected to and configured to feed the LED module (1).

FIG. 1

17A, 17B

12A

12C

12B

12A

t

FIG. 2

17A, 17B

12C

12B

12A

12A

t

FIG. 3

FIG. 4

FIG. 5

FIG. 6

Europäisches
Patentamt

European
Patent Office

Office européen
des brevets

# EUROPEAN SEARCH REPORT

**Application Number**

EP 22 20 8472

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/373699 A1 (CHEN FENG [US] ET AL) 5 December 2019 (2019-12-05) | 1-3,6-8, 10,11, 13-15 | INV. H05B45/20 H05B45/44 A01G7/04 A01G9/24 |
| Y | * paragraphs [0015], [0026] - [0037]; claims 1,12; figures 2,5-8 * | 4,5,9,12 | |
| X | EP 2 760 254 A1 (DIALOG SEMICONDUCTOR INC [US]) 30 July 2014 (2014-07-30) * paragraph [0025] - paragraph [0047]; figures 1-5 * | 1,10,15 | |
| X | WO 2015/154798 A1 (NXP BV [NL]) 15 October 2015 (2015-10-15) | 2,6,8,13 | |
| Y | * page 4, line 32 - page 13, line 21; figure 1 * | 4,9,12 | |
| Y | US 2009/322234 A1 (CHEN YUHUI [US] ET AL) 31 December 2009 (2009-12-31) * paragraph [0035] - paragraph [0039]; figures 1-4 * | 5 | |
| A | EP 2 958 402 A1 (NXP BV [NL]) 23 December 2015 (2015-12-23) * paragraph [0036] - paragraph [0059]; figures 1-7 * | 1-15 | |

**TECHNICAL FIELDS SEARCHED (IPC)**

H05B

The present search report has been drawn up for all claims

| Place of search | Date of completion of the search | Examiner |
|---|---|---|
| Munich | 3 July 2023 | Henderson, Richard |

EPO FORM 1503 03.82 (P04C01)

## ANNEX TO THE EUROPEAN SEARCH REPORT
## ON EUROPEAN PATENT APPLICATION NO.

EP 22 20 8472

This annex lists the patent family members relating to the patent documents cited in the above-mentioned European search report.
The members are as contained in the European Patent Office EDP file on
The European Patent Office is in no way liable for these particulars which are merely given for the purpose of information.

03-07-2023

| Patent document cited in search report | | Publication date | Patent family member(s) | | Publication date |
|---|---|---|---|---|---|
| US 2019373699 | A1 | 05-12-2019 | CA | 3040908 A1 | 29-11-2019 |
| | | | US | 2019373699 A1 | 05-12-2019 |
| EP 2760254 | A1 | 30-07-2014 | CN | 103974503 A | 06-08-2014 |
| | | | EP | 2760254 A1 | 30-07-2014 |
| | | | JP | 6002699 B2 | 05-10-2016 |
| | | | JP | 2014146595 A | 14-08-2014 |
| | | | US | 2014210357 A1 | 31-07-2014 |
| | | | US | 2018103523 A1 | 12-04-2018 |
| WO 2015154798 | A1 | 15-10-2015 | EP | 3130199 A1 | 15-02-2017 |
| | | | US | 2017034895 A1 | 02-02-2017 |
| | | | WO | 2015154798 A1 | 15-10-2015 |
| US 2009322234 | A1 | 31-12-2009 | CN | 102077692 A | 25-05-2011 |
| | | | JP | 5475768 B2 | 16-04-2014 |
| | | | JP | 2011527078 A | 20-10-2011 |
| | | | KR | 20110015037 A | 14-02-2011 |
| | | | US | 2009322234 A1 | 31-12-2009 |
| | | | WO | 2010002547 A1 | 07-01-2010 |
| EP 2958402 | A1 | 23-12-2015 | CN | 105282919 A | 27-01-2016 |
| | | | EP | 2958402 A1 | 23-12-2015 |
| | | | US | 2015373790 A1 | 24-12-2015 |

EPO FORM P0459

For more details about this annex : see Official Journal of the European Patent Office, No. 12/82